# EUROPEAN PATENT SPECIFICATION

(11) **EP 2 106 180 B1**
(45) Date of publication and mention of the grant of the patent: **11.05.2011**
(21) Application number: 08380103.5
(22) Date of filing: 27.03.2008
(51) Int. Cl.: H04W 28/16

(54) **Flow control method for reducing the congestion in the Abis interface in a mobile telecommunication system**
Strömungssteuerungsverfahren zur Verringerung der Überlastung in der Abis-Schnittstelle in einem mobilen Telekommunikationssystem
Procédé de contrôle de flux pour prévenir la congestion de l'interface Abis dans un système de télécommunication mobile

(43) Date of publication of application: 30.09.2009
(73) Proprietor: Vodafone Group PLC, Newbury Berkshire RG14 2FN (GB)
(72) Inventor: Güemes Cabrejas, Inigo, 28050 Madrid (ES); Arranz Arauzo, Miguel, 28050 Madrid (ES); Gomez Coloma, Alberto, 28050 Madrid (ES)
(74) Representative: Keston, David Arthur

(56) References cited:
- EP-A- 1 154 663
- US-A1- 2006 077 980
- BALL C F ET AL: "Performance analysis of dynamic TDM-transport for GSM voice and GPRS/EDGE packet data services" VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 4, 6 October 2003 (2003-10-06), pages 2645-2649, XP010703063 ISBN: 978-0-7803-7954-1

## Description

### Field of the invention

The present invention lies in the field of mobile communications, and more specifically in providing a set of techniques to manage congestion in the Abis interface according to GSM standards.

### Background of the invention

In a mobile telecommunication system, several interfaces are defined to interconnect the different nodes of the system. In the case of the GSM standards, the Abis interface is defined to interconnect the Base Transceiver Station (BTS) and the Base Station Controller (BSC).

This Abis interface is defined over a transmission network that will transport all the traffic between the BTS and the BSC. This transmission network can be implemented with different technologies (microwave, DSL, etc.) and topologies (tree, star, ring, etc.), and will have a limited capacity, i.e. will provide the Abis with a limited amount of transmission resources.

Those transmission resources have to be allocated to the different users accessing the system, in order to transport the user traffic from the BTS to the BSC, and equally from the BSC to the BTS. Additionally some resources are required to transport the system signalling.

In the classical Abis resource allocation strategy, transmission resources are allocated statically (i.e. are reserved regardless they are later used or not) in a time slot basis according to the maximum bandwidth the user may need. In other words, resources are allocated assuming the user will make a 100% utilization of resources, i.e. will have a 100% Activity Factor.

This inefficient utilization of resources can be partially solved with Abis Compression or Optimization techniques, where Abis resource is allocated according to real Activity Factor (typically 65% for voice and -20% for data). However, with such implementation (also known as "Best Effort resource allocation"), there is no protection at all against congestion, and with no proper control of traffic flow, system will collapse with any traffic burst.

Although solutions for other systems (e.g. 3G) exist, they can not be applied to Abis, due to the different approach to allocation and call handling strategies, and particular Abis behaviour in a congestion situation. Therefore, a new solution is required, targeting specific Abis implementation details and strategies, handling 2G specific traffic patterns, and addressing Abis specific weaknesses.

US patent US2002/0003783 A1 describes a method for allocating Abis interface transmission challenge, but this patent does not include any mechanism or technique to deal with congestion.

European patent EP1814340 A1 describes a method for optimized assignment of Abis transmission resources based on dynamic statistical time division multiplexing. But this patent does not describe a solution targeting voice and data services interaction.

US patent US2007/0211753 A1 describes a method for saving bandwidth on certain interfaces in a telecommunication system. In particular, it proposes the use of a low code rate for voice calls in case of Abis congestion or overload. But this patent describes only one particular technique applicable to only one service (voice) and with a number of limitations (e.g. requires terminal support of AMR-HR codecs).

European Patent Application EP 1 154 663 A1 describes a similar method, but fails to disclose that downgrading of existing calls will only kick in when needed, i.e. above a threshold loading.

### Summary of the invention

The invention relates to a flow control method for reducing the congestion in the Abis interface in a mobile telecommunication system according to claim 1. Preferred embodiments of the method are defined in the dependent claims.

This invention provides a mechanism to manage and prevent congestion in the Abis interface. The idea is to control the resources assigned to users already connected to the system. If the traffic in the system goes above a certain threshold, certain users are downgraded to prevent congestion, and are restored their original resources when the congestion risk disappears.

The invention will apply to any service (e.g. voice, Interactive/Background data, etc.) carried over a GSM network, and will be independent of the particular transmission technology (e.g. microwave, DSL,..) or topology used to transport the Abis interface.

In the present method every data call established to the system has two associated parameters: a first parameter to consider if the data call can be downgraded or not and a second parameter to consider the minimum Abis bandwidth for the data call, BW_{MIN}. And every established voice call has also the first parameter associated to consider if the voice call can be downgraded or not.

The flow control is activated whenever the Abis occupancy exceeds a flow control activation threshold, FCAT. Once it is activated, the flow control method comprises the following steps:
- analyzing established data calls one by one; in case a data call can be downgraded and is using Abis resources over its BW_{MIN}, downgrading said data call to its BW_{MIN};
- analysing established voice calls one by one; in case a voice call can be downgraded and is a full-rate call, and also the corresponding mobile terminal is half-rate capable, downgrading said voice call to half-rate.

The flow control is preferably deactivated whenever the Abis occupancy goes below a flow control deactivation threshold, FCDT. In a preferred embodiment, as long as the flow control is not deactivated no new data calls or upgrade requests are admitted.

The method preferably comprises, after downgrading a data call or a voice call:
- checking if the Abis occupancy exceeds the FCAT;
- if the Abis occupancy does not exceed the FCAT, the corresponding step of analyzing data calls or voice calls is finished.

The method preferably comprises, in case all voice calls have been checked and the Abis occupancy is still above the FCAT:
- downgrading all downgradeabte data calls, one by one, to 0 Abis resources until the Abis occupancy does not exceed the FCAT.

The parameters associated to the data calls or the voice calls can be either default values defined by the operator or assigned at call establishment according to service and/or user priority.

The steps of analyzing established data calls or voice calls one by one can be carried out according to one of these strategies: a LIFO strategy or a FIFO strategy.

### Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:
Figure 1 represents a block diagram with the elements from a GSM system in the scope of the invention: BTS, BSC and Abis interface.
Figure 2 shows graphically how the Abis flow control method works.
Figure 3 depicts a flowchart for a preferred embodiment of an Abis flow control method, describing the process followed to prevent any congestion situation in the system.

### Detailed description of the preferred embodiments

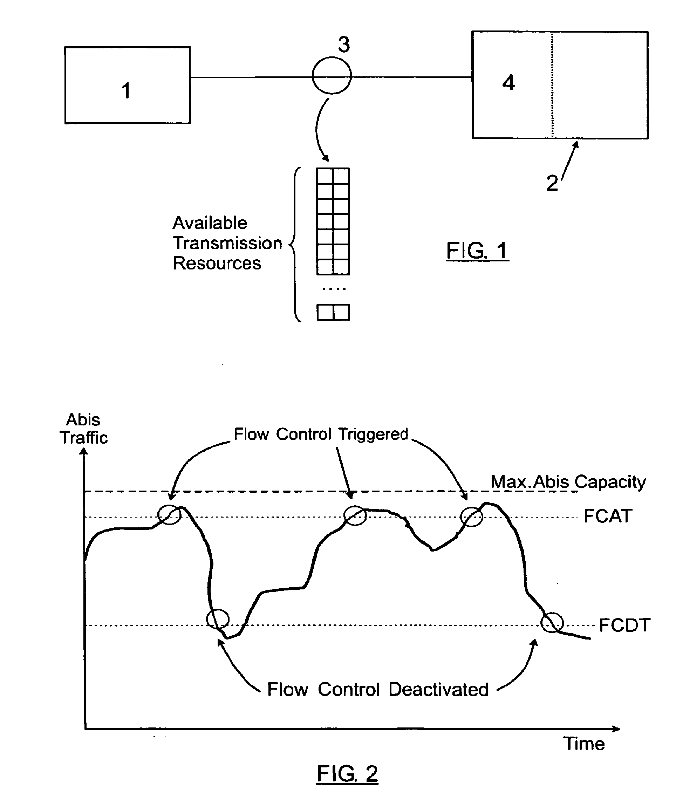

As shown in **Figure 1**, every BTS 1 (or group of BTSs sharing a transmission path) is connected to a BSC 2 over an Abis Interface 3. This Abis interface will have assigned a finite amount of transmission resources, also known as Abis bandwidth.

A transmission resources pool is defined comprising all available Abis bandwidth, and a Flow Control Entity 4 is defined at the BSC in order to monitor and control Abis resource usage.

Two operator-configurable thresholds are defined: Flow Control Activation Threshold (FCAT) and Flow Control Deactivation Threshold (FCDT), both as a percentage of the available Abis capacity (maximum number of available transmission resources). Values assigned to these thresholds must follow the following rule: 100% >= FCAT >= FCDT >= 0%. This two thresholds are represented in **Figure 2**.

The Flow Control Entity 4 monitors Abis occupancy at certain periods defined by the operator. Time between measurements will be adjusted according to the burstiness of the traffic in the system. If this time is too long, the algorithm will be too slow to react, but if it is too short, the flow control will be triggered unnecessarily by every "short burst" of traffic. The operator will choose a balanced value according to the actual traffic profile in its network.

Every data call established to the system will have two associated parameters that can be either operator defined default values or assigned at call establishment according to service and user priority: "Downgradeable" tag: Minimum Abis bandwidth per call, BW_{MIN}.

In the case of voice service, every call established will also have associated a "downgradeable" flag, according to user priority.

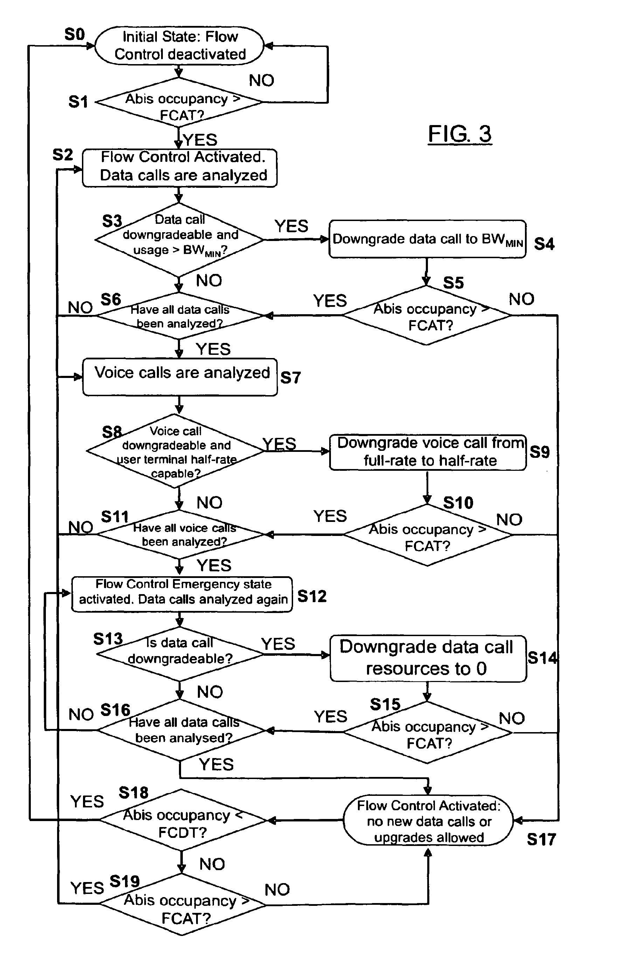

Figure 3 illustrates how the flow control method works. Whenever Abis traffic exceeds FCAT (S1), Flow Control Entity 4 triggers the flow control process.

First, data calls are analyzed (S2). Every data call with "downgradeable" flag set to 1 is analyzed following a LIFO (most recent calls are analized first) or FIFO (least recent calls are analized first) strategy, as selected by the operator. If the call under analysis is using Abis resources over its BW_{MIN} value (S3), it will be downgraded to this value (S4).

After every single downgrade performed, Abis resource usage is checked again (S5). If it goes below FCAT, flow control process is halted and no more data calls are analyzed (S17).

If all data calls have been addressed (S6), and Abis occupancy is still above FCAT, voice calls are then targeted (S7). Every voice call with "downgradeable" flag set to 1 is analized, again following a LIFO or FIFO strategy at the operator's choice. If the call under analysis is a full-rate call, and the terminal is half-rate capable (S8), it will be downgraded to half-rate (S9). Again, Abis resource occupancy is checked after every single downgrade (S10). The process stops once Abis occupancy goes below FCAT (S17).

It is advisable to check and downgrade the data calls first, and then the voice calls. However, those steps could be interchangeable, so the voice calls could be first analyzed and then the data calls.

If all voice calls have been checked and Abis occupancy is still above FCAT (S11), "Flow Control Emergency state" is activated (S12). Flow Control Entity 4 will start fully downgrading data calls, checking first if each call is downgradeable or not (S13), again following a LIFO or FIFO strategy at the operator's choice, to 0 Abis resources (but without dropping the call) (S14). Abis resource usage is checked after every single full-downgrade (S15), and the process will stop once Abis occupancy goes below FCAT (S17), or if all the data calls have been analyzed (S16).

Once the flow control process has been activated, no new data call or upgrade request will be admitted in the system (S17).

If at any point Abis usage goes below FCDT (S18), new data calls and upgrade requests from users are admitted again in the system, and the flow control is deactivated (S0). If Abis occupancy exceeds the FCAT (S19), the flow control is activated (S2).

Different flow control strategies are available for the operator, according to the desired level of protection against Abis congestion. In case a conservative usage of resources is desired, in order to minimize the probability of congestion (thus protecting user Quality of Service), a low value of FCAT should be used; additionally, lower values of FCDT will provide further protection against congestions, but at the expense of efficiency. On the other hand, if an aggressive strategy is preferred, in order to optimize transmission efficiency, FCAT value should be closer to 100%, and FCDT should also have a higher value.

A 100% value for FCAT will imply deactivation of the feature, since that value will never be reached without entering in a congestion situation.

## Claims

1. Flow control method for reducing the congestion in the Abis interface in a mobile telecommunication system, **characterized in that** every data call established to the system has two associated parameters:
• a first parameter to consider if the data call can be downgraded or not;
• a second parameter to consider the minimum Abis bandwidth for the data call, BW_{MIN};
whereas every established voice call has also the first parameter associated to consider if the voice call can be downgraded or not;
and **in that** said flow control is activated whenever the Abis occupancy exceeds a flow control activation threshold (FCAT); said flow control method comprising, every time it is activated:
- analyzing (S2) established data calls one by one; in case a data call can be downgraded and is using Abis resources over its BW_{MIN} (S3), downgrading (S4) said data call to its BW_{MIN};
- analysing (S7) established voice calls one by one; in case a voice call can be downgraded and is a full-rate call, and also the corresponding mobile terminal is half-rate capable (S8), downgrading (S9) said voice call to half-rate.

2. Flow control method according to claim 1, **characterized in that** said flow control is deactivated (S0) whenever the Abis occupancy goes below a flow control deactivation threshold (FCDT).

3. Flow control method according to any of claims 1-2, **characterized in that** as long as the flow control is not deactivated no new data calls or upgrade requests are admitted.

4. Flow control method according to any of claims 1-3, **characterized in that** the method comprises, after downgrading (S4, S9) a data call or a voice call:
- checking (S5, S10) if the Abis occupancy exceeds the FCAT;
- if the Abis occupancy does not exceed the FCAT, the corresponding step of analyzing data calls (S2) or voice calls (S7) is finished (S17).

5. Flow control method according to any of claims 1-4, **characterized in that** the method comprises, in case all voice calls have been checked and the Abis occupancy is still above the FCAT:
- downgrading (S14) all downgradeable data calls, one by one, to 0 Abis resources until the Abis occupancy does not exceed the FCAT.

6. Flow control method according to any of claims 1-5, **characterized in that** the parameters associated to the data calls or the voice calls are default values defined by the operator.

7. Flow control method according to any of claims 1-5, **characterized in that** the parameters associated to the data calls or the voice calls are assigned at call establishment according to service and/or user priority.

8. Flow control method according to any of claims 1-7, **characterized in that** the steps of analyzing established data calls (S2) or voice calls (S7) one by one is carried out according to one of these strategies:
- a LIFO strategy;
- a FIFO strategy.

## Patentansprüche

1. Flusssteuerungsverfahren zum Reduzieren von Überlastung in der Abis-Schnittstelle in einem mobilen Telekommunikationssystem, **dadurch gekennzeichnet, dass** jeder zu dem System aufgebaute Datenanruf zwei assoziierte Parameter hat:
• einen ersten Parameter, um zu prüfen, ob der Datenanruf herabgestuft (Downgrade) werden kann oder nicht;
• einen zweiten Parameter, um die Abis-Mindestbandbreite BW_{MIN} fiir den
Datenanruf zu prüfen;
wobei in jedem aufgebauten Sprachanruf auch der erste Parameter assoziiert ist, um zu prüfen, ob der Sprachanruf herabgestuft werden kann oder nicht;
und **dadurch**, dass die genannte Flusssteuerung immer dann aktiviert wird, wenn die Abis-Belegung einen Flusssteuerungsaktivierungsschwellenwert (FCAT) übersteigt; wobei das genannte Flusssteuerungsverfahren bei jeder Aktivierung Folgendes beinhaltet:
- Analysieren (S2) aufgebauter Datenanruf nacheinander; falls ein Datenanruf herabgestuft werden kann und Abis-Ressourcen über seine BW_{MIN} (S3) benutzt, Herabstufen (S4) des genannten Datenanrufs auf seine BW_{MIN};
- Analysieren (S7) ausgebauter Datenanrufe nacheinander; falls ein Sprachanruf herabgesetzt werden kann und ein Vollratenanruf ist und außerdem das entsprechende mobile Endgerät halbratenfähig (S8) ist, Herabstufen (S9) des genannten Sprachanrufs auf die halbe Rate.

2. Flusssteuerungsverfahren nach Anspruch 1, **dadurch gekennzeichnet, dass** die genannte Flusssteuerung immer dann deaktiviert (S0) wird, wenn die Abis-Belegung unter einen Flusssteuerungsdeaktivierungsschwellenwert (FCDT) abfällt.

3. Flusssteuerungsverfahren nach einem der Ansprüche 1-2, **dadurch gekennzeichnet, dass**, solange die Flusssteuerung nicht deaktiviert ist, keine neuen Datenanrufe oder Heraufstuf (Upgrade)-Anforderungen zugelassen werden.

4. Flusssteuerungsverfahren nach einem der Ansprüche 1-3, **dadurch gekennzeichnet, dass** das Verfahren nach dem Herabstufen (S4, S9) eines Datenanrufs oder eines Sprachanrufs Folgendes beinhaltet:
- Prüfen (S5, S10), ob die Abis-Belegung den FCAT übersteigt;
- Beenden (S17) des entsprechenden Schrittes des Analysierens von Datenanrufen (S2) oder Sprachanrufen (S7), wenn die Abis-Belegung den FCAT nicht übersteigt.

5. Flusssteuerungsverfahren nach einem der Ansprüche 1-4, **dadurch gekennzeichnet, dass** das Verfahren, falls alle Sprachanrufe geprüft wurden und die Abis-Belegung immer noch über dem FCAT liegt, Folgendes beinhaltet:
- Herabstufen (S 14) aller herabstufbaren Datenanrufe nacheinander bis auf 0 Abis-Ressourcen, bis die Abis-Belegung den FCAT nicht mehr übersteigt.

6. Flusssteuerungsverfahren nach einem der Ansprüche 1-5, **dadurch gekennzeichnet, dass** die mit den Datenanrufen oder den Sprachanrufen assoziierten Parameter vom Operator definierte Vorgabewerte sind.

7. Flusssteuerungsverfahren nach einem der Ansprüche 1-5, **dadurch gekennzeichnet, dass** die mit den Datenanrufen oder den Sprachanrufen assoziierten Parameter beim Anrufaufbau nach Dienst- und/oder Nutzerpriorität zugeordnet werden.

8. Flusssteuerungsverfahren nach einem der Ansprüche 1-7, **dadurch gekennzeichnet, dass** die Schritte des Analysierens aufgebauter Datenanrufe (S2) oder Sprachanrufe (S7) nacheinander gemäß einer der folgenden Strategien ausgeführt werden:
- eine LIFO-Strategie;
- eine FIFO-Strategie.

## Revendications

1. Procédé de contrôle de flux pour réduire la congestion dans l'interface Abis dans un système de télécommunications mobile, **caractérisé en ce que** chaque appel Données établi vers le système comporte deux paramètres associés :
• un premier paramètre pour considérer si l'appel Données peut être déclassé ou non ;
• un deuxième paramètre pour considérer la largeur de bande Abis minimum pour l'appel Données, BW_{MIN} ;
alors que chaque appel vocal établi comporte également le premier paramètre associé pour considérer si l'appel vocal peut être déclassé ou non ;
et **en ce que** ledit contrôle de flux est activé chaque fois que l'occupation de l'Abis dépasse un seuil d'activation de contrôle de flux (FCAT) ; ledit procédé de contrôle de flux, chaque fois qu'il est activé, comprenant les opérations consistant à :
- analyser (S2) à tour de rôle les appels Données établis ; dans le cas où un appel Données peut être déclassé et qu'il utilise les ressources de l'Abis au-delà de sa BW_{MIN} (S3), déclasser (S4) ledit appel Données jusqu'à sa BW_{MIN} ;
- analyser (S7) à tour de rôle les appels vocaux établis ; dans le cas où un appel vocal peut être déclassé et est un appel plein débit, et également que le terminal mobile correspondant est apte au demi-débit (S8), déclasser (S9) ledit appel vocal jusqu'au demi-débit.

2. Procédé de contrôle de flux selon la revendication 1, **caractérisé en ce que** ledit contrôle de flux est désactivé (S0) chaque fois que l'occupation de l'Abis descend au-dessous d'un seuil de désactivation de contrôle de flux (FCDT).

3. Procédé de contrôle de flux selon l'une quelconque des revendications 1 à 2, **caractérisé en ce qu'**aucun nouvel appel Données ou nouvelle demande de surclassement n'est autorisé tant que le contrôle de flux n'est pas désactivé.

4. Procédé de contrôle de flux selon l'une quelconque des revendications 1 à 3, **caractérisé en ce que** le procédé comprend, après le déclassement (S4, S9) d'un appel Données ou d'un appel vocal :
- l'opération consistant à vérifier (S5, S10) si l'occupation de l'Abis dépasse le FCAT ;
- si l'occupation de l'Abis ne dépasse pas le FCAT, l'étape correspondante de l'analyse des appels Données (S2) ou des appels vocaux (S7) est terminée (S 17).

5. Procédé de contrôle de flux selon l'une quelconque des revendications 1 à 4, **caractérisé en ce que** le procédé comprend, dans le cas où tous les appels vocaux ont été vérifiés et que l'occupation de l'Abis se situe encore au-dessus du FCAT :
- l'opération consistant à déclasser (S14) à tour de rôle tous les appels Données aptes à être déclassés, vers 0 ressources Abis jusqu'à ce que l'occupation de l'Abis ne dépasse pas le FCAT.

6. Procédé de contrôle de flux selon l'une quelconque des revendications 1 à 5, **caractérisé en ce que** les paramètres associés aux appels Données ou aux appels vocaux sont des valeurs par défaut lesquelles sont définies par l'opérateur.

7. Procédé de contrôle de flux selon l'une quelconque des revendications 1 à 5, **caractérisé en ce que** les paramètres associés aux appels Données ou aux appels vocaux sont attribués lors de l'établissement de l'appel en fonction de la priorité du service et/ou de l'utilisateur.

8. Procédé de contrôle de flux selon l'une quelconque des revendications 1 à 7, **caractérisé en ce que** les étapes consistant à analyser à tour de rôle les appels Données (S2) ou les appels vocaux (S7) établis sont effectuées en fonction de l'une des stratégies suivantes :
- une stratégie LIFO [dernier entré, premier sorti] ;
- une stratégie FIFO [premier entré, premier sorti].
